# EUROPEAN PATENT APPLICATION

(11) **EP 4 300 010 A1**
(43) Date of publication of application: **03.01.2024**
(21) Application number: 23172653.0
(22) Date of filing: 10.05.2023
(51) Int. Cl.: F25B 43/00, F25B 43/04

(54) **REFRIGERATION SYSTEM, THE ASSOCIATED METHOD OF OPERATING A PURGE SYSTEM, AND SEPARATOR SYSTEM**

(30) Priority: 28.06.2022 US 202263356330 P
(71) Applicant: Carrier Corporation, Palm Beach Gardens, FL 33418 (US)
(72) Inventor: WITTMER, Jacob, Charlotte, 28269 (US); D'ABRUZZO, Karina, Charlotte, 28269 (US); STARK, Michael, Charlotte, 28269 (US); HUGHES, Howard, Charlotte, 28269 (US); RANJAN, Rajiv, Charlotte, 28269 (US); GOPIREDDY, Sudhakara, Charlotte, 28269 (US)
(74) Representative: Dehns

(57) **Abstract**

A refrigeration system (10) includes a vapor compression loop and a purge system (30) in communication with the vapor compression loop. The purge system includes at least one separator (60) for separating contaminants from a purge gas provided from the vapor compression loop to the separator. The at least one separator has a vertical orientation.

## Description

Exemplary embodiments of the disclosure relate generally to chiller systems used in heating, ventilation, and air conditioning (HVAC) systems, and more particularly to a purge system for removing contaminants from a refrigeration system.

Chiller systems such as those utilizing centrifugal compressors may include sections that operate below atmospheric pressure. As a result, leaks in the chiller system may draw in air, contaminating the refrigerant. This contamination degrades the performance of the chiller system. To address this problem, existing low-pressure chillers include a purge system to mitigate gas contamination. Existing purge systems use a vapor compression cycle to separate contaminant gas from the refrigerant. Existing purge systems are large, complex, and sometimes lose refrigerant in the gas removal process.

According to a first aspect, a refrigeration system includes a vapor compression loop and a purge system in communication with the vapor compression loop. The purge system includes at least one separator for separating contaminants from a purge gas provided from the vapor compression loop to the separator. The at least one separator has a vertical orientation.

The refrigeration system may comprise a manifold, an end of the at least one separator being fluidly connected to the manifold and extending at an angle to the manifold.

The at least one separator may comprise a housing having a hollow interior and a separating component mounted within the hollow interior.

The purge gas may comprise a refrigerant and the separating component includes a separator tube having at least one membrane including a porous surface through which the contaminants, but not the refrigerant passes.

A first end of the separator tube may be sealed and a second, opposite end of the separator tube, may be open.

The refrigeration system may comprise a movement mechanism operable to increase a pressure of the purge gas, wherein the pressure of the purge gas moves the contaminants through the separator.

The movement mechanism may be a compressor.

The separator may have a refrigerant outlet, the refrigeration system may comprise a valve arranged downstream from and in fluid communication with the refrigerant outlet.

According to a second aspect, a separator system for removing contamination from a fluid of a heat pump includes a manifold having an inlet and an outlet and at least one separator fluidly connected to the manifold and extending at an angle to the manifold. The at least one separator has a vertical orientation.

The at least one separator may comprise a housing having a hollow interior, a first end, and a second end, the first end of the housing being fluidly coupled to the manifold and a fluid outlet being formed at the second end and at least one separating component mounted within the hollow interior. The at least one separating component may be fluidly coupled to the fluid outlet.

A first end of the at least one separating component may be sealed and a second opposite end of the at least one separating component may be open.

The at least one separating component may include at least one membrane including a porous surface through which gas, but not refrigerant passes.

The at least one separating component may include a separator tube.

The at least one separating component may include a sieving material.

According to a third aspect, a method of operating a purge system includes circulating a refrigerant through a vapor compression loop, receiving a purge gas from the vapor compression loop at the purge system, the purge gas including the refrigerant and contaminants; and separating the contaminants from the purge gas within a separator, the separator optionally having a vertical orientation. Separating the contaminants from the purge gas comprises separating the purge gas into a liquid and a vapor within the separator.

The method may comprise pressurizing at least a portion of the refrigerant within the purge gas upstream from the separator.

Pressurizing at least the portion of the refrigerant within the purge gas may occur as the purge gas moves through a conduit coupling a movement mechanism to the separator.

The method may comprise pressurizing the purge gas via a movement mechanism to form a pressurized purge gas.

The method may comprise returning the refrigerant of the purge gas to the vapor compression loop.

Certain exemplary embodiments will now be described in greater detail by way of example only and with reference to the accompanying drawings in which:
FIG. 1 is a schematic diagram of an exemplary vapor compression loop of a refrigerant system;
FIG. 2 is a schematic depiction of an exemplary membrane purge system for a refrigeration system; and
FIG. 3 is a cross-sectional view of a separator of the purge system of FIG. 2.

A detailed description of one or more embodiments of the disclosed apparatus and method are presented herein by way of exemplification and not limitation with reference to the Figures. Like elements are numbered alike.

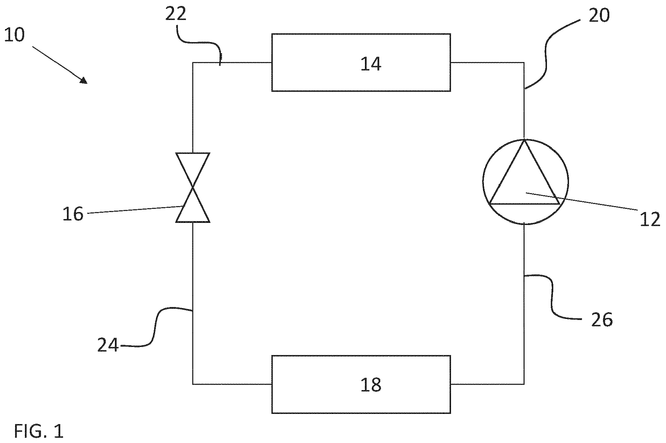

Referring now to FIG. 1, an example of a refrigeration system 10 is illustrated. As used herein, the term refrigeration system is intended to include any system capable of heating and/or cooling, such as a vapor compression system, a sorption system, a geothermal system, a waste heat recovery system, a heat based cooling system, and a heating system. As shown, refrigeration system 10 includes a compressor 12, a condenser 14, an expansion valve 16, and an evaporator 18. The compressor 12 pressurizes heat transfer fluid in its gaseous state, which both heats the fluid and provides pressure to circulate it through the system. In some embodiments, the heat transfer fluid, or refrigerant, includes an organic compound. For example, in some embodiments, the refrigerant comprises at least one of a hydrocarbon, substituted hydrocarbon, a halogen-substituted hydrocarbon, a fluoro-substituted hydrocarbon, or a chloro-fluoro-substituted hydrocarbon.

The hot pressurized gaseous heat transfer fluid exiting from the compressor 12 flows through a conduit 20 to a heat rejection heat exchanger such as condenser 14. The condenser is operable to transfer heat from the heat transfer fluid to the surrounding environment, resulting in condensation of the hot gaseous heat transfer fluid to a pressurized moderate temperature liquid. The liquid heat transfer fluid exiting from the condenser 14 flows through conduit 22 to expansion valve 16, where the pressure is reduced. The reduced pressure heat transfer fluid exiting the expansion valve 16 flows through conduit 24 to a heat absorption heat exchanger such as evaporator 18. The evaporator 18 functions to absorb heat from the surrounding environment and boil the heat transfer fluid. Gaseous heat transfer fluid exiting the evaporator 18 flows through conduit 26 to the compressor 12, so that the cycle may be repeated.

The refrigeration system 10 has the effect of transferring heat from the environment surrounding the evaporator 18 to the environment surrounding the condenser 14. The thermodynamic properties of the heat transfer fluid must allow it to reach a high enough temperature when compressed so that it is greater than the environment surrounding the condenser 14, allowing heat to be transferred to the surrounding environment. The thermodynamic properties of the heat transfer fluid must also have a boiling point at its post-expansion pressure that allows the temperature surrounding the evaporator 18 to provide heat to vaporize the liquid heat transfer fluid.

Various types of refrigeration systems include a vapor compression loop as illustrated and described herein. One such refrigeration system is a chiller system. Portions of a refrigeration system, such as the cooler of a chiller system for example, may operate at a low pressure (e.g., less than atmosphere) which can cause contamination (e.g., ambient air or water or other environmental gasses) to be drawn into the fluid loop of the refrigeration system 10. The contamination degrades performance of the refrigeration system. To improve operation, the refrigeration system 10 may additionally include a purge system 30 for removing contamination from the heat transfer fluid of the refrigeration system 10.

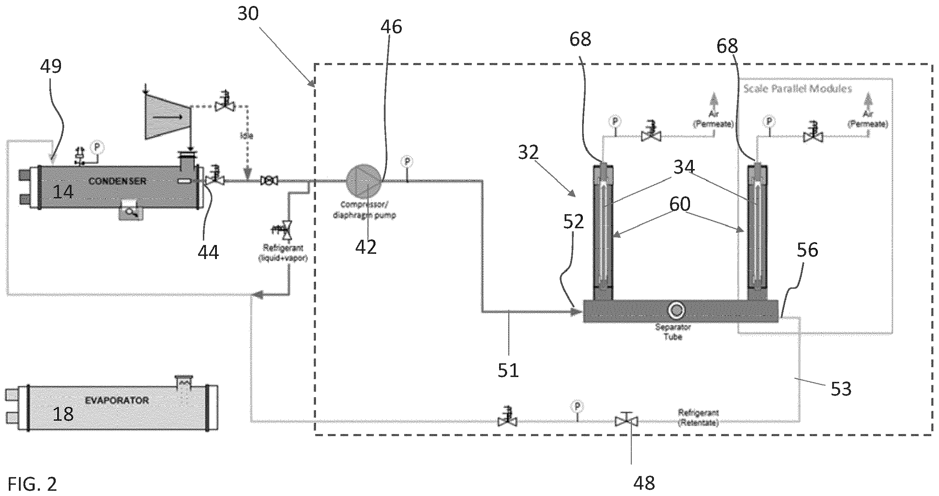

With reference now to FIG. 2, an example of a purge system 30 is illustrated. As shown, the purge system 30 includes at least one separator 32 configured to receive a flow of purge gas, which includes refrigerant gas and contaminants, such as nitrogen and oxygen for example. In the illustrated, non-limiting embodiment, the separator 32 includes a separating component 34 for separating contaminants from the refrigerant gas. In other embodiments, the separator 32 may include a vessel or housing containing one or more beds of sorbent or sieving material operable to separate a non-condensable gas from the purge gas through pressure swing sorption (PSA). Although a single separator 32 is illustrated, it should be understood that embodiments including a plurality of separators 32, arranged in series or parallel, are also contemplated herein.

In embodiments where the separating component 34 includes at least one membrane, the one or more membranes may include a polymeric material or a porous inorganic material. Examples of polymeric materials may include, but are not limited to Polytetrafluoroethylene, synthetic fluoropolymers of tetrafluoroethylene, Polystyrene, and Polypropylene. Examples of porous inorganic material can include ceramics such as metal oxides or metal silicates, more specifically aluminosilicates, (e.g., Chabazite Framework (CHA) zeolite, Linde type A (LTA) zeolite), porous carbon, porous glass, clays (e.g., Montmorillonite, Halloysite). Porous inorganic materials can also include porous metals such as platinum and nickel. Hybrid inorganic-organic materials such as a metal organic framework (MOF) can also be used. Other materials can be present in the membrane such as a carrier in which a microporous material can be dispersed, which can be included for structural or process considerations.

Metal organic framework materials are well-known in the art and comprise metal ions or clusters of metal ions coordinated to organic ligands to form one-, two- or three-dimensional structures. A metal-organic framework can be characterized as a coordination network with organic ligands containing voids. The coordination network can be characterized as a coordination compound extending, through repeating coordination entities, in one dimension, but with cross-links between two or more individual chains, loops, or spiro-links, or a coordination compound extending through repeating coordination entities in two or three dimensions. Coordination compounds can include coordination polymers with repeating coordination entities extending in one, two, or three dimensions. Examples of organic ligands include but are not limited to bidentate carboxylates (e.g., oxalic acid, succinic acid, phthalic acid isomers, etc.), tridentate carboxylates (e.g., citric acid, trimesic acid), azoles (e.g., 1,2,3-triazole), as well as other known organic ligands. A wide variety of metals can be included in a metal organic framework. Examples of specific metal organic framework materials include but are not limited to zeolitic imidazole framework (ZIF), HKUST-1.

In embodiments where the separating component 34 includes a sieving material, the sorbent material may be a porous inorganic material. Examples of suitable sorbent materials include, but are not limited to, zeolites, activated carbon, ionic liquids, metal organic framework, oils, clay materials, and molecular sieves for example. When the layer of sieve material is pressurized to a high pressure, the more readily permeable component of the purge gas provided to the inlet 52 of the separator 32 is selectively separated by the sieve material and forms a separation front that passes from the inlet toward the outlet 68. The less readily permeable component of the purge gas bypasses through the layer of sieve material and is recovered from the outlet end 56 thereof for further processing or use downstream.

In the illustrated, non-limiting embodiment, the contaminant within the purge gas, such as oxygen for example, is the more readily permeable component, and the refrigerant is the less permeable component within the purge gas. Accordingly, if the purge gas is passed through a separator 32 containing a layer of sieve material that attracts oxygen, part or all of the oxygen in the purge gas will stay within the core of permeable material. Consequently, the purge gas discharged from the outlet end 56 of the separator 32 will be richer in refrigerant than the purge gas entering the separator 32. Gaseous contaminants, such as oxygen for example, will be released from the permeable material and may be exhausted from the separator 32 via a secondary outlet 68, such as to the ambient atmosphere, external to the refrigeration circuit.

The material of the separating component 34 may have pores and, in some embodiments, the pore sizes of the separating component 34 can be characterized by a pore size distribution with an average pore size from 2.5 Å to 10.0 Å, and a pore size distribution of at least 0.1 Å. In some embodiments, the average pore size for the porous material can be in a range with a lower end of 2.5 Å to 4.0 Å and an upper end of 2.6 Å to 10.0 Å. A. In some embodiments, the average pore size can be in a range having a lower end of 2.5 Å, 3.0 Å, 3.5 Å, and an upper end of 3.5 Å, 5.0 Å, or 6.0 Å. These range endpoints can be independently combined to form a number of different ranges, and all ranges for each possible combination of range endpoints are hereby disclosed. Porosity of the material can be in a range having a lower end of 5%, 10%, or 15%, and an upper end of 85%, 90%, or 95% (percentages by volume). These range endpoints can be independently combined to form a number of different ranges, and all ranges for each possible combination of range endpoints are hereby disclosed.

The above microporous materials can be synthesized by hydrothermal or solvothermal techniques (e.g., sol-gel) where crystals are slowly grown from a solution. Templating for the microstructure can be provided by a secondary building unit (SBU) and the organic ligands. Alternate synthesis techniques are also available, such as physical vapor deposition or chemical vapor deposition, in which metal oxide precursor layers are deposited, either as a primary microporous material, or as a precursor to an MOF structure formed by exposure of the precursor layers to sublimed ligand molecules to impart a phase transformation to an MOF crystal lattice.

In some embodiments, the above-described membrane materials can provide a technical effect of promoting separation of contaminants (e.g., nitrogen, oxygen and/or water molecules) from refrigerant gas, which is condensable. Other air-permeable materials, such as porous or non-porous polymers can be subject to solvent interaction with the matrix material, which can interfere with effective separation. In some embodiments, the capabilities of the materials described herein can provide a technical effect of promoting the implementation of an embodiment of a refrigeration systems with purge, as described in more detail with reference to the example embodiments below.

The separating component 34 can be self-supporting or it can be supported, for example, as a layer on a porous support or integrated with a matrix support material. In some embodiments, thickness of a support for a supported membrane can range from 50 nm to 1000 nm, more specifically from 100 nm to 750 nm, and even more specifically from 250 nm to 500 nm. In the case of tubular membranes, fiber diameters can range from 100 nm to 2000 nm, and fiber lengths can range from 0.2 m to 2 m.

In some embodiments, the microporous material can be deposited on a support as particles in a powder or dispersed in a liquid carrier using various techniques such as spray coating, dip coating, solution casting, etc. The dispersion can contain various additives, such as dispersing aids, rheology modifiers, etc. Polymeric additives can be used; however, a polymer binder is not needed, although a polymer binder can be included and in some embodiments is included such as with a mixed matrix membrane comprising a microporous inorganic material (e.g., microporous ceramic particles) in an organic (e.g., organic polymer) matrix. However, a polymer binder present in an amount sufficient to form a contiguous polymer phase can provide passageways in the membrane for larger molecules to bypass the molecular sieve particles. Accordingly, in some embodiments a polymer binder is excluded. In other embodiments, a polymer binder can be present in an amount below that needed to form a contiguous polymer phase, such as embodiments in which the membrane is in series with other membranes that may be more restrictive. In some embodiments, particles of the microporous material (e.g., particles with sizes of 0.01 µm to 10 mm, or in some embodiments from 0.5 µm to 10 µm) can be applied as a powder or dispersed in a liquid carrier (e.g., an organic solvent or aqueous liquid carrier) and coated onto the support followed by removal of the liquid. In some embodiments, the application of solid particles of microporous material from a liquid composition to the support surface can be assisted by application of a driving force across the support. For example, a vacuum can be applied from the opposite side of the support as the liquid composition comprising the solid microporous particles to assist in application of the solid particles to the surface of the support. A coated layer of microporous material can be dried to remove residual solvent and optionally heated to fuse the microporous particles together into a contiguous layer. Various membrane structure configurations can be utilized, including but not limited to flat or planar configurations, tubular configurations, or spiral configurations. In some embodiments, the membrane can include a protective polymer coating or can utilize or can utilize backflow or heating to regenerate the membrane.

In some embodiments, the microporous material can be configured as nanoplatelets, such as zeolite nanosheets for example. Zeolite nanosheet particles can have thicknesses ranging from 2 to 50 nm, more specifically 2 to 20 nm, and even more specifically from 2 nm to 10 nm. Zeolite such as zeolite nanosheets can be formed from any of various zeolite structures, including but not limited to framework type MFI, MWW, FER, LTA, FAU, and mixtures of the preceding with each other or with other zeolite structures. In a more specific group of exemplary embodiments, the zeolite such as zeolite nanosheets can comprise zeolite structures selected from MFI, MWW, FER, LTA framework type. Zeolite nanosheets can be prepared using known techniques such as exfoliation of zeolite crystal structure precursors. For example, MFI and MWW zeolite nanosheets can be prepared by sonicating the layered precursors (multilamellar silicalite-1 and ITQ-1, respectively) in solvent. Prior to sonication, the zeolite layers can optionally be swollen, for example with a combination of base and surfactant, and/or melt-blending with polystyrene. The zeolite layered precursors are typically prepared using conventional techniques for preparation of microporous materials such as sol-gel methods.

With continued reference to FIG. 2, the purge system 30 additionally includes a movement mechanism 42 arranged upstream, and in some embodiments directly upstream, from an inlet 52 of the separator system 32. The movement mechanism 42 may be any suitable device operable to move the purge gas through the purge system 30, including but not limited to a compressor or a diaphragm. As shown, the movement mechanism 42 may be configured to receive purge gas from a purge connection 44 of the condenser 14 and is operable to increase the temperature and pressure of the purge gas provided thereto. In an embodiment, the purge gas provided at an outlet 46 of the movement mechanism 42 has a pressure greater than 45 psia (310 kPa (absolute)), and in some embodiments equal to or greater than 50 psia (350 kPa (absolute)), 55 psia (380 kPa (absolute)), or 60 psia (410 kPa (absolute)). Accordingly, the pressure of the purge gas itself may be sufficient to drive the flow of purge gas to the separator 32 and/or the flow of refrigerant output from the separator 32 to the condenser 14.

As will be discussed in more detail below, the separator system 32, also referred to herein as a separator, is operable to separate contaminants from the refrigerant gas. In the illustrated, non-limiting embodiment, an orifice or a valve 48, such as a needle valve for example, is arranged downstream from the refrigerant outlet 56 of the separator 32. The orifice 48 may be operable to control the flow rate of the refrigerant recirculated back to an inlet 49 of the condenser 14. In an embodiment, the flow rate at the orifice 48 is less than the flow rate of the refrigerant and gas combination provided at the outlet 46 of the movement mechanism 42. As a result, purge gas comprising refrigerant gas and contaminants may accumulate within the separator 32.

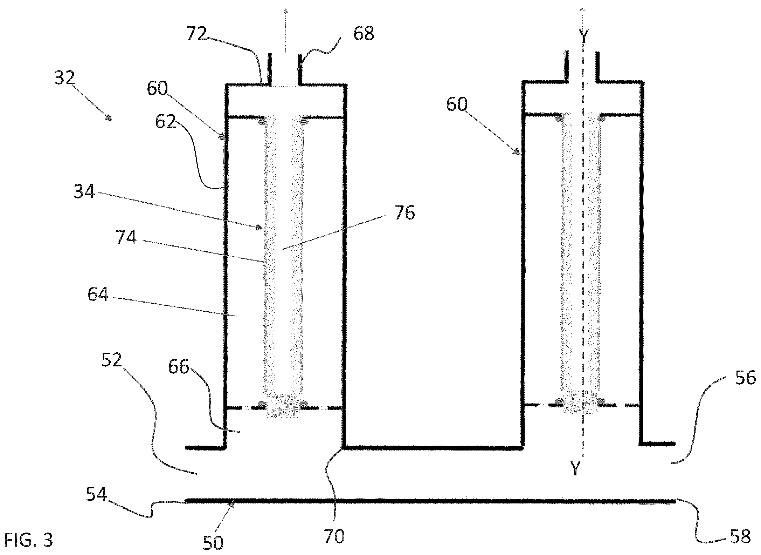

With reference now to FIG. 3, an example of a separator system 32 is illustrated in more detail. In the illustrated, non-limiting embodiment, the separator system 32 includes a manifold 50 including an inlet 52 arranged at or near a first end 54 thereof and a refrigerant outlet 56 arranged at or near a second end 58 thereof. Although the first end 54 and the second end 58 are illustrated as being at opposite ends of the manifold 50, embodiments where the inlet and outlet are arranged at adjacent sides of the manifold 50, or alternatively, at the same side of the manifold, are also contemplated herein. At least one separator 60, also referred to herein as a separator module, is fluidly connected to the manifold 50. Although two separators 60 are illustrated in the FIGS., it should be understood that embodiments including a single separator 60, as well as embodiments including more than two separators 60, such as three, four, five, six or more separator modules 60 for example, are also within the scope of the disclosure. In embodiments including a plurality of separators 60, a configuration of the plurality of separators 60 may be substantially identical or may vary.

In the illustrated, non-limiting embodiment, at least one separator or separator module 60 is arranged at an angle relative to the axis of the manifold 50. As shown, one or more separator modules 60 may be oriented perpendicular relative to the manifold such that the separator module has a substantial vertical orientation. A separator module 60 may include a housing 62 having a generally hollow interior 64. Although the housing 62 is shown as being generally cylindrical in shape, it should be understood that a housing 62 having any shape is within the scope of the disclosure. In addition, the housing 62 includes a fluid inlet 66 and a fluid outlet 68. In the illustrated embodiment, the fluid inlet 66 is arranged adjacent a first end 70 of the housing 62 and is in fluid communication with the interior of the manifold. The fluid outlet 68 is spaced from the fluid inlet 66, and may be arranged adjacent a second, opposite end 72 of the housing 62. Although the fluid outlet 68 is illustrated as being arranged generally central along an axis Y defined by the separator module 60, embodiments where the fluid outlet 68 is at another location relative to the separator module housing 62 are also contemplated herein. Because the separator module 60 is oriented vertically, the separator module 60 may also function as a separator, whereby the denser refrigerant liquid will remain near the first end 66 at the bottom, or within the manifold 50, and the less dense refrigerant gas and air will flow upwards, towards the second end 72.

At least one separating component 34 is mounted within the hollow interior 64 of the housing 62. As shown in FIG. 3, in an embodiment, the at least one separating component 34 includes one or more degassing tubes positioned longitudinally within the hollow interior 64 of the housing 62. In an embodiment, each of the separator tubes includes a body 74 formed from a ceramic zeolite material. A first end of the body 74, such as located adjacent the first end of the housing 62, may be sealed and a second, opposite end of the body 74 may be open and fluidly connected to the fluid outlet 68.

In the illustrated, non-limiting embodiment, a refrigerant including contaminants is configured to contact an exterior surface of at least one separating component 34. As a result, the contaminants separated from the refrigerant may transfer radially inward to an interior of the at least one separating component 34. For example, in the non-limiting embodiment of FIG. 3, the at least one separating component 34 includes one or more inorganic membranes having a porous surface through which gaseous contaminants, but not liquid refrigerant, can diffuse due to their difference in molecular size.

During operation of the purge system 30, the contaminated refrigerant output from the condenser 14 is provided to the movement mechanism 42, where the contaminated refrigerant is pressurized. In an embodiment, as the contaminated refrigerant gas flows through a conduit 51 from the outlet 46 of the movement mechanism 42 to the separator 32, the purge gas is cooled at least partially via conduction, and in some embodiments, heat is transferred to a fluid surrounding the conduit 51, such as ambient air for example. As a result of this heat transfer, at least a portion of the refrigerant of the purge gas provided to the separator 32 has condensed into a liquid. By increasing the pressure of the purge gas at a location upstream from the separator 32, the stratification that occurs within the separator modules 60 of the separator 32 may be enhanced.

As the contaminated refrigerant enters the manifold 50 of the separator 32 via the inlet 52, the refrigerant vapor and air entrained therein flow into the fluid inlet 66 of the one or more separator modules 60. In an embodiment, the contaminated refrigerant vapor is balanced between the plurality of separator modules 60 fluidly coupled to the manifold 50. Within the interior 64 of the housing 62, the contaminated refrigerant contacts the exterior surface of the at least one separating component 34, causing the contaminants, such as air for example, to diffuse through the sidewall and into the hollow interior 76 of the separating component 34. From the hollow interior of the separating component 34, the contaminants may be provided to the fluid outlet 68 where the contaminants may be exhausted from the purge system 30, such as into the ambient atmosphere.

The liquid refrigerant within the manifold 50 is provided from the outlet 56 to the orifice 48, such as via conduit 53 for example, for return to the heat pump 10. By positioning the refrigerant outlet 56 at the downstream end of the manifold relative to the refrigerant flow, the refrigerant output from the separator 32 has a reduced concentration of contaminants therein compared to the refrigerant provided to the fluid inlet 52 of the separator 32.

A purge system 30 as illustrated and described herein has an increased air removal rate compared to existing purge gas systems. By orienting the separator modules 60 vertically, the gravitational forces acting on the material therein causes a natural separation of the liquid and gaseous components. Accordingly, the denser liquid refrigerant will remain within the manifold and the gaseous contaminants and air will flow into the interior of the separator module housing 62. The resulting purge system has a reduced cost and complexity, and an increased efficiency.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made, and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A refrigeration system (10) comprising:
a vapor compression loop;
a purge system (30) in communication with the vapor compression loop, the purge system comprising at least one separator (32) for separating contaminants from a purge gas provided from the vapor compression loop to the separator, wherein the at least one separator has a vertical orientation.

2. The refrigeration system (10) of claim 1, comprising a manifold (50), an end of the at least one separator (32) being fluidly connected to the manifold and extending at an angle to the manifold.

3. The refrigeration system (10) of claim 1 or 2, wherein the at least one separator (32) comprises:
a housing (62) having a hollow interior (64); and
a separating component (34) mounted within the hollow interior.

4. The refrigeration system (10) of claim 3, wherein the purge gas comprises a refrigerant and the separating component (34) comprises a separator tube having at least one membrane including a porous surface through which the contaminants, but not the refrigerant passes, and
wherein optionally a first end of the separator tube is sealed and a second, opposite end of the separator tube, is open.

5. The refrigeration system (10) of any preceding claim, comprising a movement mechanism (42) operable to increase a pressure of the purge gas, wherein the pressure of the purge gas moves the contaminants through the separator (32), and
wherein the movement mechanism (42) is optionally a compressor.

6. The refrigeration system (10) of any preceding claim, wherein the separator (32) has a refrigerant outlet (56), the refrigeration system comprising a valve (48) arranged downstream from and in fluid communication with the refrigerant outlet.

7. A separator system (32) for removing contamination from a fluid of a heat pump, the separator comprising:
a manifold (50) having an inlet (52) and an outlet (56);
at least one separator (60) fluidly connected to the manifold and extending at an angle to the manifold, the at least one separator having a vertical orientation.

8. The separator system (60) of claim 7, wherein the at least one separator (32) comprises:
a housing (62) having a hollow interior (64), a first end (70), and a second end (72), the first end of the housing being fluidly coupled to the manifold (50) and a fluid outlet (68) being formed at the second end; and
at least one separating component (34) mounted within the hollow interior, wherein the at least one separating component is fluidly coupled to the fluid outlet.

9. The separator system (60) of claim 8, wherein a first end of the at least one separating component (34) is sealed and a second opposite end of the at least one separating component is open.

10. The separator system (60) of claims 8 or 9, wherein the at least one separating component (34) includes at least one membrane including a porous surface through which gas, but not refrigerant passes, wherein the at least one separating component (34) optionally includes a separator tube.

11. The separator system (60) of claims 8, 9 or 10, wherein the at least one separating component (34) includes a sieving material.

12. A method of operating a purge system (30) comprising:
circulating a refrigerant through a vapor compression loop;
receiving a purge gas from the vapor compression loop at the purge system (30), the purge gas including the refrigerant and contaminants; and
separating the contaminants from the purge gas within a separator (60), the separator having a vertical orientation, wherein separating the contaminants from the purge gas comprises separating the purge gas into a liquid and a vapor within the separator.

13. The method of claim 12, comprising pressurizing at least a portion of the refrigerant within the purge gas upstream from the separator (60),
wherein pressurizing at least the portion of the refrigerant within the purge gas optionally occurs as the purge gas moves through a conduit (51) coupling a movement mechanism (42) to the separator (60).

14. The method of claim 12 or 13, comprising pressurizing the purge gas via a movement mechanism (42) to form a pressurized purge gas.

15. The method of any of claims 12 to 14, comprising returning the refrigerant of the purge gas to the vapor compression loop.
